# EUROPEAN PATENT APPLICATION

(11) **EP 4 834 607 A1**
(43) Date of publication of application: **04.11.2026**
(21) Application number: 25902847.0
(22) Date of filing: 15.08.2025
(51) Int. Cl.: B60J 7/00, B60J 3/00, B60J 1/00, E06B 9/74

(54) **ELECTRIC DUAL-SUNSHADE SYSTEM, CONTROL METHOD, AND NEW ENERGY VEHICLE**

(30) Priority: 12.12.2024 CN 202411830247
(71) Applicant: Chery Automobile Co., Ltd., Wuhu, Anhui 241006 (CN)
(72) Inventor: WU, Jun, Wuhu, Anhui 241006 (CN); TU, Jingang, Wuhu, Anhui 241006 (CN); ZHANG, Bibo, Wuhu, Anhui 241006 (CN); YANG, Peng, Wuhu, Anhui 241006 (CN); FENG, Fan, Wuhu, Anhui 241006 (CN)
(74) Representative: Adamson Jones
(86) International application number: PCT/CN2025/115104
(87) International publication number: WO 2026/123760

(57) **Abstract**

An electric dual-sunshade system, a control method, and a new energy vehicle, relating to the field of automotive accessories. The electric dual-sunshade system comprises a front sunshade (4) and a rear sunshade (5). One end of the front sunshade (4) is connected to a front sunshade support crossbar (10). One end of the rear sunshade (5) is connected to a rear sunshade support crossbar (11). Two ends of the front sunshade support crossbar (10) are respectively connected to a front sunshade left pull cord (14) and a front sunshade right pull cord (16). Two ends of the rear sunshade support crossbar (11) are respectively connected to a rear sunshade left pull cord (15) and a rear sunshade right pull cord (17). The front sunshade left pull cord (14) and the front sunshade right pull cord (16) are pulled by a front sunshade motor (12). The rear sunshade left pull cord (15) and the rear sunshade right pull cord (17) are pulled by a rear sunshade motor (13). A front sunshade rolling mechanism is mounted at the other end of the front sunshade (4). A rear sunshade rolling mechanism is mounted at the other end of the rear sunshade (5). The electric dual-sunshade system occupies a smaller Z-direction space, while enabling a larger light-transmitting area for the rear seat, and the sunshades can be effectively rolled up and maintain corresponding states.

## Description

This present disclosure claims priority to Chinese Patent Application No. 202411830247.6, filed on December 12, 2024, and entitled "ELECTRIC DUAL SUNSHADE SYSTEM, METHOD FOR CONTROLLING SAME, AND NEW ENERGY AUTOMOBILE", the entire contents of which are incorporated herein by reference.

### TECHNICAL FIELD

The present disclosure relates to the field of automobile accessories, and more particularly to an electric dual sunshade system, a method for controlling the same, and a new energy vehicle.

### BACKGROUND

Compared to traditional fuel-powered vehicles, most new energy vehicle models adopt panoramic glass to provide users with a better driving experience. Users can enjoy the vast visual space brought by panoramic glass. However, in summer, panoramic glass absorbs a large amount of heat, causing the issue of the panoramic glass baking the head. New energy vehicles pursue extreme aerodynamic performance and extreme styling, resulting in a small Z-direction space between the heads of the driver and passengers and the panoramic glass. The existing sunshade structure cannot be mounted in this smaller Z-direction space.

The related art provides a dual-opening sunroof sunshade, which includes a panoramic sunroof and a sunshade. The sunshade includes a front-opening sunshade and a rear-opening sunshade that cover the front and rear of the panoramic sunroof respectively. A driving assembly for the sunshade is mounted in the middle of the panoramic sunroof. In the above solution, the driving assemblies for the front and rear-opening sunshades are separately arranged at the front and rear ends, resulting in a large space occupied by the entire sunshade, and the distribution of the driving assemblies tends to affect the field of vision.

### SUMMARY

Addressing the deficiencies of prior art, the purpose of the present disclosure is to provide an electric dual sunshade system, a method for controlling the same, and a new energy vehicle that occupy less Z-direction space while providing a larger light transmission area for the rear seats, and the sunshade can effectively roll up and maintain its corresponding state.

To achieve the above objectives, the present disclosure is implemented through the following technical solutions.

In a first aspect, embodiments of the present disclosure provide an electric dual sunshade system, including a front sunshade, a rear sunshade, a front sunshade support crossbar, a rear sunshade support crossbar, a front sunshade left pull cord, a front sunshade right pull cord, a rear sunshade left pull cord, a rear sunshade right pull cord, a front sunshade motor, a rear sunshade motor, a front sunshade retraction mechanism, a rear sunshade retraction mechanism, and a connection crossmember;
one end of the front sunshade is connected to the front sunshade support crossbar, and one end of the rear sunshade is connected to the rear sunshade support crossbar, two ends of the front sunshade support crossbar are respectively connected to the front sunshade left pull cord and the front sunshade right pull cord, two ends of the rear sunshade support crossbar are respectively connected to the rear sunshade left pull cord and the rear sunshade right pull cord, the front sunshade left pull cord and the front sunshade right pull cord are drawn by the front sunshade motor, and the rear sunshade left pull cord and the rear sunshade right pull cord are pulled by the rear sunshade motor; and
the front sunshade retraction mechanism is mounted at other end of the front sunshade, and the rear sunshade retraction mechanism is mounted at other end of the rear sunshade, the front sunshade retraction mechanism and the rear sunshade retraction mechanism are arranged side by side on the connection crossmember.

In some embodiments of the present disclosure, the electric dual sunshade system further includes a front crossmember, a rear crossmember, a left guide rail, and a right guide rail, wherein two ends of the left guide rail are respectively connected to one end of the front crossmember and one end of the rear crossmember, and two ends of the right guide rail are respectively connected to other end of the front crossmember and other end of the rear crossmember; and
the front sunshade retraction mechanism and the rear sunshade retraction mechanism are connected at a determined position between the left guide rail and the right guide rail.

In some embodiments of the present disclosure, the front sunshade motor and the rear sunshade motor are mounted on the front crossmember; and
the front crossmember is internally provided with guide grooves for the front sunshade left pull cord, the front sunshade right pull cord, the rear sunshade left pull cord, and the rear sunshade right pull cord to pass through.

In some embodiments of the present disclosure, the front sunshade retraction mechanism includes a front sunshade roller tube and front sunshade retractors, wherein each end of the front sunshade roller tube is connected to one of the front sunshade retractors; and
the rear sunshade retraction mechanism includes a rear sunshade roller tube and rear sunshade retractors, wherein each end of the rear sunshade roller tube is connected to one of the rear sunshade retractors.

In some embodiments of the present disclosure, the front sunshade retraction mechanism further includes a front sunshade spring barrel, a front sunshade support long shaft, a front sunshade long coil spring, a front sunshade short coil spring, and a front sunshade support short shaft; wherein
the front sunshade retractor disposed at one end of the front sunshade roller tube is connected to the front sunshade support short shaft, and the front sunshade short coil spring is mounted on the front sunshade support short shaft; and
the front sunshade retractor disposed at the other end of the front sunshade roller tube is connected to the front sunshade support long shaft, the front sunshade long coil spring is mounted on the front sunshade support long shaft, the front sunshade spring barrel is sleeved over outer side of the front sunshade long coil spring, and the front sunshade roller tube is sleeved over outer side of the front sunshade short coil spring and the front sunshade spring barrel.

In some embodiments of the present disclosure, the rear sunshade retraction mechanism further includes a rear sunshade support short shaft, a rear sunshade short coil spring, a rear sunshade support long shaft, a rear sunshade long coil spring, and a rear sunshade spring barrel; wherein
the rear sunshade retractor disposed at one end of the rear sunshade roller tube is connected to the rear sunshade support short shaft, and the rear sunshade short coil spring is mounted on the rear sunshade support short shaft; and
the rear sunshade retractor disposed at the other end of the rear sunshade roller tube is connected to the rear sunshade support long shaft, the rear sunshade long coil spring is mounted on the rear sunshade support long shaft, the rear sunshade spring barrel is sleeved over outer side of the rear sunshade long coil spring, and the rear sunshade roller tube is sleeved over outer side of the rear sunshade short coil spring and the rear sunshade spring barrel.

In some embodiments of the present disclosure, the front sunshade retraction mechanism further includes a front sunshade support roller mounted on the front sunshade support long shaft, wherein the front sunshade support roller is in rolling fit with an inner wall of the front sunshade roller sleeve.

In some embodiments of the present disclosure, the rear sunshade retraction mechanism further includes a rear sunshade support roller mounted on the rear sunshade support long shaft, wherein the rear sunshade support roller is in rolling fit with an inner wall of the rear sunshade roller sleeve.

In some embodiments of the present disclosure, the front sunshade spring barrel and/or the rear sunshade spring barrel are made of foam material.

In some embodiments of the present disclosure, the electric dual sunshade system further includes a front sunshade left pull cord connector, a front sunshade right pull cord connector, a rear sunshade left pull cord connector, and a rear sunshade right pull cord connector; wherein
the front sunshade left pull cord is connected to the front sunshade left pull cord connector, and the front sunshade right pull cord is connected to the front sunshade right pull cord connector, the front sunshade left pull cord connector cooperates with the left guide rail, and the front sunshade right pull cord connector cooperates with the right guide rail; and
the rear sunshade left pull cord is connected to the rear sunshade left pull cord connector, and the rear sunshade right pull cord is connected to the rear sunshade right pull cord connector, the rear sunshade left pull cord connector cooperates with the left guide rail, and the rear sunshade right pull cord connector cooperates with the right guide rail.

In the second aspect, embodiments of the present disclosure provide a method for controlling the electric dual sunshade system as described in any embodiments of the above first aspect, wherein the electric dual sunshade system includes a fully open state, a fully closed state, a front-open and rear-closed state, and a front-closed and rear-open state; wherein
in the fully open state, the front sunshade motor and the rear sunshade motor respectively control the front sunshade and the rear sunshade to retract;
in the fully closed state, the front sunshade motor and the rear sunshade motor respectively control the front sunshade and the rear sunshade to deploy;
in the front-open and rear-closed state, the front sunshade motor controls the front sunshade to retract, and the rear sunshade motor controls the rear sunshade to deploy; and
in the front-closed and rear-open state, the front sunshade motor controls the front sunshade to deploy, and the rear sunshade motor controls the rear sunshade to retract.

In the third aspect, embodiments of the present disclosure further provide a new energy vehicle mounted with the electric dual sunshade system as described above.

The present disclosure at least archives the following beneficial effects.

The present disclosure adopts a dual sunshade structure including a front sunshade and a rear sunshade, and adopts two rollers. This design reduces the roller diameter of each individual sunshade by positioning the retracting structure at the junction of the two sunshades. The retracting structure does not occupy the headroom of the front or second row of the vehicle and does not affect the driver's or passengers' vision. The control motors for both the front and rear sunshades are mounted on the front crossmember, simplifying the rear end structure of the sunshades without obstructing the view of the front-row occupants. A retraction mechanism is disposed in the front and rear sunshades in the present disclosure. In the mechanism, a long support shaft, a short support shaft, a long spring, and a short spring are combined with a retractor to provide better retraction and support effects for the sunshades, preventing the sunshade cloth from sagging when deployed.

Due to the provided front and rear sunshade retractors, during the stretching process of the retractor, the inner diameter of the coil decreases until is the retractor is clamped tightly with the spring drum, which then drives the left coil end to rotate. Because the coil groove of the spring drum is connected to the short coil spring, the coil groove drives the short coil spring to rotate. By setting the motor stall torque and the rotational torque of the short coil spring to achieve balance, it can ensure that the sunshade is tightly sealed when closed and avoid excessive stretching of the front sunshade retractor caused by motor over-stroke rotation, which is irreversible.

### BRIEF DESCRIPTION OF DRAWINGS

The drawings accompanying the specification, which form part of the present disclosure, are intended to provide further understanding of the invention. The illustrative embodiments of the invention and their descriptions are used to explain the invention and do not constitute undue limitations on the invention.
FIG. 1 is a schematic diagram of an electric dual sunshade system according to some embodiments of the present disclosure;
FIG. 2 is a schematic diagram of an electric dual sunshade system according to some embodiments of the present disclosure;
FIG. 3 is a side view of the electric dual sunshade system according to some embodiments of the present disclosure;
FIG. 4 is a schematic diagram of the front crossmember of the electric dual sunshade system according to some embodiments of the present disclosure;
FIG. 5 is a schematic diagram of the left guide rail of the electric dual sunshade system according to some embodiments of the present disclosure;
FIG. 6 is a schematic diagram of the left guide rail of the electric dual sunshade system according to some embodiments of the present disclosure;
FIG. 7 is a schematic diagram of the right guide rail of the electric dual sunshade system according to some embodiments of the present disclosure;
FIG. 8 is a schematic diagram of the right guide rail of the electric dual sunshade system according to some embodiments of the present disclosure;
FIG. 9 is a schematic diagram of the retraction mechanism of the electric dual sunshade system according to some embodiments of the present disclosure;
FIG. 10 is a schematic structural diagram of the rear sunshade retractor of the electric dual sunshade system according to some embodiments of the present disclosure;
FIG. 11 is a schematic structural diagram of the front sunshade retractor of the electric dual sunshade system according to some embodiments of the present disclosure;
FIG. 12 is a schematic structural diagram of the left pull cord structure of the front sunshade of the electric dual sunshade system according to some embodiments of the present disclosure;
FIG. 13 is a schematic structural diagram of the right pull cord structure of the front sunshade of the electric dual sunshade system according to some embodiments of the present disclosure;
FIG. 14 is a schematic structural diagram of the left pull cord structure of the rear sunshade of the electric dual sunshade system according to some embodiments of the present disclosure;
FIG. 15 is a schematic structural diagram of the right pull cord structure of the rear sunshade of the electric dual sunshade system according to some embodiments of the present disclosure;
FIG. 16 is a schematic structural diagram of the left coil end of the rear sunshade of the electric dual sunshade system according to some embodiments of the present disclosure;
FIG. 17 is a schematic structural diagram of the right coil end of the rear sunshade of the electric dual sunshade system according to some embodiments of the present disclosure;
FIG. 18 is a schematic structural diagram of the right coil end head of the front sunshade of the electric dual sunshade system according to some embodiments of the present disclosure;
FIG. 19 is a schematic structural diagram of the left coil end head structure of the front sunshade of the electric dual sunshade system according to some embodiments of the present disclosure;
FIG. 20 is a schematic structural diagram of the long coil spring structure of the electric dual sunshade system according to some embodiments of the present disclosure;
FIG. 21 is a schematic structural diagram of the short coil spring structure of the electric dual sunshade system according to some embodiments of the present disclosure;
FIG. 22 is a schematic structural diagram of the support long shaft structure of the electric dual sunshade system according to some embodiments of the present disclosure;
FIG. 23 is a schematic structural diagram of the short support and long shaft structure of the electric dual sunshade system according to some embodiments of the present disclosure;
FIG. 24 is a schematic diagram of the electric dual sunshade system in a fully open state according to some embodiments of the present disclosure;
FIG. 25 is a schematic diagram of the retracting front sunshade when the electric dual sunshade system is in a fully open state according to some embodiments of the present disclosure;
FIG. 26 is a schematic diagram of the retracting rear sunshade when the electric dual sunshade system is in a fully open state according to some embodiments of the present disclosure;
FIG. 27 is a schematic diagram of the electric dual sunshade system in a fully closed state according to some embodiments of the present disclosure;
FIG. 28 is a schematic diagram of the electric dual sunshade system in a front-open and rear-closed state according to some embodiments of the present disclosure;
FIG. 29 is a schematic diagram of the retracting front sunshade when the electric dual sunshade system is in a front-open and rear-closed state according to some embodiments of the present disclosure;
FIG. 30 is a schematic diagram of the retracting rear sunshade when the electric dual sunshade system is in a front-open and rear-closed state according to some embodiments of the present disclosure
FIG. 31 is a schematic diagram of the electric dual sunshade system in a front-closed and rear-open state according to some embodiments of the present disclosure;
FIG. 32 is a schematic diagram of the extending front sunshade when the electric dual sunshade system is in a front-closed and rear-open state according to some embodiments of the present disclosure; and
FIG. 33 is a schematic diagram of the retracting rear sunshade when the electric dual sunshade system is in a front-closed and rear-open state according to some embodiments of the present disclosure.

The descriptions of each mark in the FIGS. are as follows:
1. front crossmember, 2. right guide rail, 3. left guide rail, 4. front sunshade, 5. rear sunshade, 6. rear crossmember, 7. connection crossmember, 8. left rubber block, 9. right rubber block, 10. front sunshade support crossbar, 11. rear sunshade support crossbar, 12. front sunshade motor, 13. rear sunshade motor, 14. front sunshade left pull cord, 15. rear sunshade left pull cord, 16. front sunshade right pull cord, 17. rear sunshade right pull cord, 18. front sunshade left pull cord guide groove, 19. rear sunshade left pull cord guide groove, 20. front sunshade right pull cord guide groove, 21. rear sunshade right pull cord guide groove, 22. main positioning pin, 23. auxiliary positioning pin, 24. left pre-hanging buckle, 25. right pre-hanging buckle, 26. front sunshade left pull cord connector, 27. front sunshade right pull cord connector, 28. rear sunshade left pull cord connector, 29. rear sunshade right pull cord connector, 30. rear sunshade roller sleeve, 31. rear sunshade retractor, 32. front sunshade roller sleeve, 33. front sunshade retractor, 34. rear sunshade left coil end, 35. rear sunshade spring barrel, 36. rear sunshade long coil spring, 37. rear sunshade support roller, 38. rear sunshade support long shaft, 39. rear sunshade right coil end, 40. rear sunshade short coil spring, 41. rear sunshade support short shaft, 42. front sunshade right coil end, 43. front sunshade spring barrel, 44. front sunshade long coil spring, 45. front sunshade support roller, 46. front sunshade support long shaft, 47. front sunshade left coil end, 48. front sunshade short coil spring, and 49. front sunshade support short shaft.

### DETAILED DESCRIPTION

It should be noted that the following detailed description is illustrative and is intended to provide further clarification of the present disclosure. Unless otherwise indicated, all technical and scientific terms used in the present disclosure have the same meaning as commonly understood by those skilled in the technical field to which the present disclosure pertains.

For ease of description, the terms "upper", "lower", "left", and "right" appearing in the present disclosure only indicate consistency with the directions of the accompanying drawings, and do not limit the structure. They are solely used to facilitate and simplify the description of the present disclosure, rather than indicating or implying that the specified devices or components must have a specific orientation, be constructed, or operate in a specific orientation. Therefore, they cannot be construed as limitations on the present disclosure.

### Embodiment 1

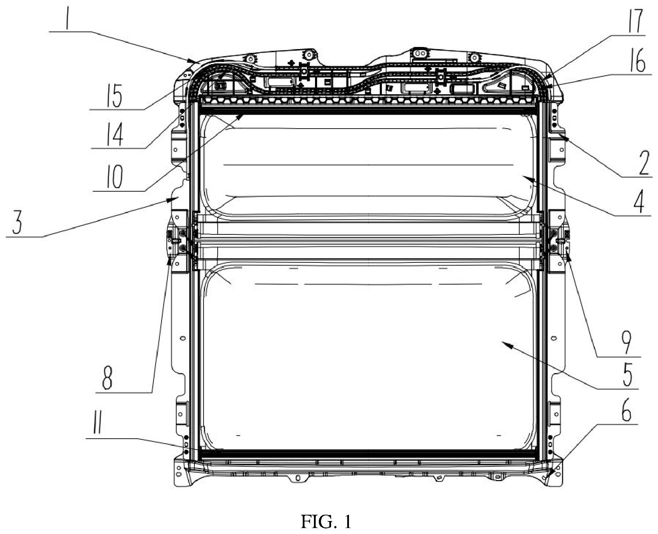

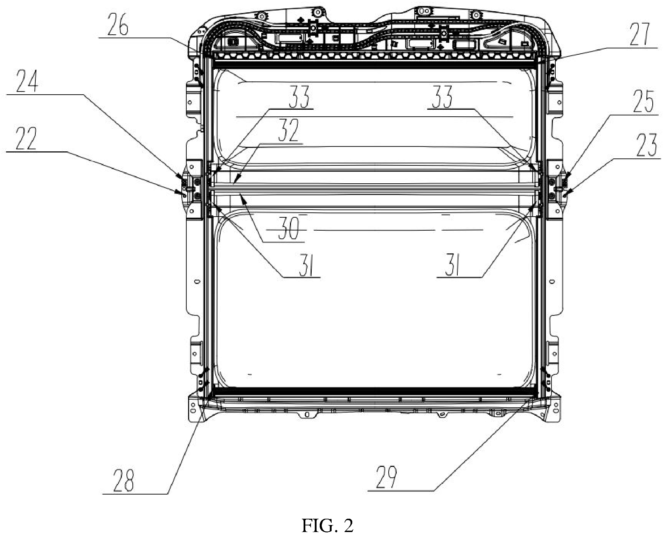

The embodiment provides an electric dual sunshade system, as shown in FIGS. 1 to3, which includes two sunshades arranged in sequence, with the front direction of the vehicle as the front. The two sunshades are the front sunshade 4 and the rear sunshade 5. The retraction mechanisms of the front sunshade 4 and the rear sunshade 5 are arranged at corresponding front end or rear end positions on the system frame, either at the front or rear end, depending on the coverage area of the front sunshade 4 and the rear sunshade 5. For example, when the coverage areas of the front sunshade 4 and the rear sunshade 5 are the same, the retraction mechanism is arranged at the middle position of the system frame. This arrangement does not occupy the headroom of the front or second row seats, and does not affect the vision of the driver and the passenger.

As shown in FIGS. 1 to 3, the electric dual sunshade system according to some embodiments of the present disclosure includes a front sunshade 4, a rear sunshade 5, a front sunshade support crossbar 10, a rear sunshade support crossbar 11, a front sunshade left pull cord 14, a front sunshade right pull cord 16, a rear sunshade left pull cord 15, a rear sunshade right pull cord 17, a front sunshade motor 12, a rear sunshade motor 13, a front sunshade retraction mechanism, a rear sunshade retraction mechanism, and a connection crossmember 7. One end of the front sunshade 4 is connected to the front sunshade support crossbar 10, and one end of the rear sunshade 5 is connected to the rear sunshade support crossbar 11. Two ends of the front sunshade support crossbar 10 are respectively connected to the front sunshade left pull cord 14 and the front sunshade right pull cord 16. Two ends of the rear sunshade support crossbar 11 are respectively connected to the rear sunshade left pull cord 15 and the rear sunshade right pull cord 17. The front sunshade left pull cord 14 and the front sunshade right pull cord 16 are drawn by the front sunshade motor 12, and the rear sunshade left pull cord 15 and the rear sunshade right pull cord 17 are pulled by the rear sunshade motor 13. The front sunshade retraction mechanism is mounted at the other end of the front sunshade, and the rear sunshade retraction mechanism is mounted at the other end of the rear sunshade. The front sunshade retraction mechanism and the rear sunshade retraction mechanism are arranged side by side on the connection crossmember.

Specifically, the electric dual sunshade system also includes a system framework consisting of a front crossmember 1, a rear crossmember 6, a left guide rail 3, and a right guide rail 2. The two ends of the left guide rail 3 are respectively connected to one end of the front crossmember 1 and one end of the rear crossmember 6, and the two ends of the right guide rail 2 are respectively connected to the other end of the front crossmember 1 and the other end of the rear crossmember 6. The guide grooves of both the left and right guide rails 3 and 2 are opened inward, serving as guides for the deployment and retraction of the front sunshade 4 and the rear sunshade 5.

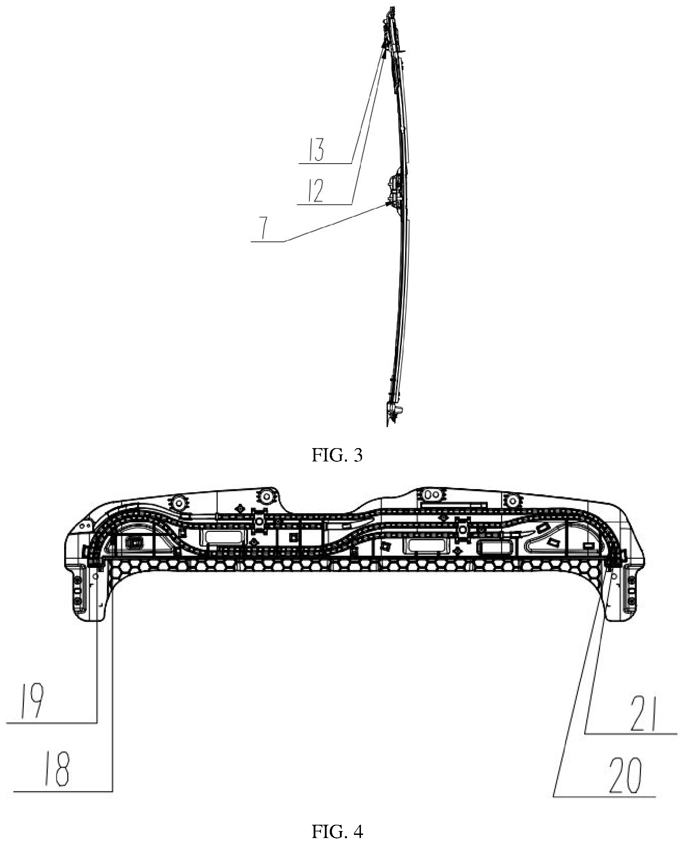

As shown in FIG. 4, the front crossmember 1 consists of a crossmember body and support legs at both ends of the crossmember body, forming an integral structure. A fixing hole is disposed on the front end surface of the crossmember body for connecting to the inner plate of the front roof crossmember of the vehicle body. The front sunshade support crossbar 10 is connected to the rear side of the front crossmember 1. A front sunshade left pull cord guide groove 18, a rear sunshade left pull cord guide groove 19, a front sunshade right pull cord guide groove 20, and a rear sunshade right pull cord guide groove 21 are disposed in the crossmember body. The front sunshade left pull cord 14 is disposed in the front sunshade left pull cord guide groove 18, and the rear sunshade left pull cord 15 is disposed in the rear sunshade left pull cord guide groove 19. The front sunshade left pull cord 14 is disposed in the front sunshade left pull cord guide groove 18, and the front sunshade right pull cord 16 is disposed in the front sunshade right pull cord guide groove 20. The rear sunshade left pull cord 15 is disposed in the rear sunshade left pull cord guide groove 19, and the rear sunshade right pull cord 17 is disposed in the rear sunshade right pull cord guide groove 21. The movement trajectory of the rear sunshade right pull cord 17 is guided by the right pull cord guide rail rubber sleeve, and the movement trajectory of the front sunshade left pull cord 14 is guided by the left pull cord guide rail rubber sleeve.

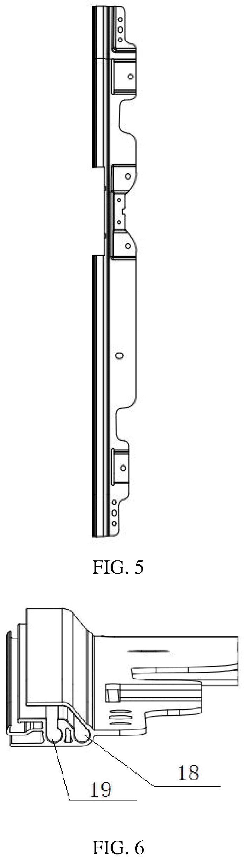

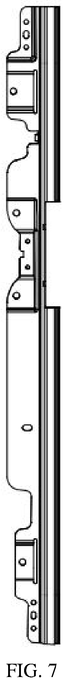

As shown in FIGS. 5 to 8, both the left guide rail 3 and the right guide rail 2 are vertical crossmembers. A front sunshade left pull cord guide groove 18 and a rear sunshade left pull cord guide groove 19 are disposed in the left guide rail 3. The front sunshade left pull cord guide groove 18 in the left guide rail 3 is connected to the front sunshade left pull cord guide groove 18 in the front crossmember 1, and the rear sunshade left pull cord guide groove 19 in the left guide rail 3 is connected to the rear sunshade left pull cord guide groove 19 in the front crossmember 1. A front sunshade right pull cord guide groove 20 and a rear sunshade right pull cord guide groove 21 are disposed in the right guide rail 2. The front sunshade right pull cord guide groove 20 in the right guide rail 2 is connected to the front sunshade right pull cord guide groove 20 in the front crossmember 1, and the rear sunshade right pull cord guide groove 21 in the right guide rail 2 is connected to the rear sunshade right pull cord guide groove 21 in the front crossmember 1.

The front sunshade left pull cord 14 and the front sunshade right pull cord 16 are connected to the front sunshade support crossbar 10 via corresponding connectors, and the rear sunshade left pull cord 15 and the rear sunshade right pull cord 17 are connected to the rear sunshade support crossbar 11 via corresponding connectors. The front sunshade support crossbar 10 is clamped to one end of the front sunshade 4, and the other end of the front sunshade 4 is connected to the front sunshade retractor 33. The rear sunshade support crossbar 11 is clamped to one end of the rear sunshade 5, and the other end of the rear sunshade 5 is connected to the rear sunshade retractor 31. The pull cords are driven forward and backward by a motor, which drives the front sunshade support crossbar 10 and the rear sunshade support crossbar 11 to move forward and backward, thus achieving the forward and backward movement of the front sunshade 4 and the rear sunshade 5. In the embodiment, the front sunshade support crossbar 10 and the rear sunshade support crossbar 11 are aluminum alloy rods with grooves formed in, and are provided with corresponding fixing clamping grooves for the sunshades.

As shown in FIGS. 1 and 3, the rear crossmember 6 is an H-shaped crossmember, and the rear sunshade support crossbar 11 is connected to the front side of the rear crossmember 6. A connection crossmember 7 is also connected between the left guide rail 3 and the right guide rail 2, and two ends of the connection crossmember 7 are disposed at certain lengths on the left guide rail 3 and the right guide rail 2 respectively. The front sunshade retractor 33 and the rear sunshade retractor 31 are mounted on the connection crossmember 7. Specifically, the connection crossmember 7 is a W-shaped crossmember, and two parallel grooves are disposed in the connection crossmember 7 for mounting the front sunshade retraction mechanism and the rear sunshade retraction mechanism.

A left rubber block 8 is disposed on the mounting position outside the left guide rail 3 corresponding to the front and rear sunshade retraction mechanisms. A right rubber block 9 is disposed outside the right guide rail 2. A left pre-hanging buckle 24 and a main positioning pin 22 are mounted on the left rubber block 8, and a right pre-hanging buckle 25 and an auxiliary positioning pin 23 are mounted on the right rubber block 9. The main positioning pin 22 serves as the primary positioning reference when fixing the electric dual sunshade system to the inner plate bracket on the left side of the vehicle body, and the auxiliary positioning pin 23 serves as an auxiliary positioning reference when fixing the electric dual sunshade system to the inner plate bracket on the right side of the vehicle body. The left pre-hanging buckle 24 is used for the pre-fixing connection between the electric dual sunshade system and the inner plate bracket on the left side of the vehicle body, and the right pre-hanging buckle 25 is used for the pre-fixing connection between the electric dual sunshade system and the inner plate bracket on the right side of the vehicle body. Upon pre-fixing, the electric dual sunshade system is easy to be mounted and assembled in the vehicle body.

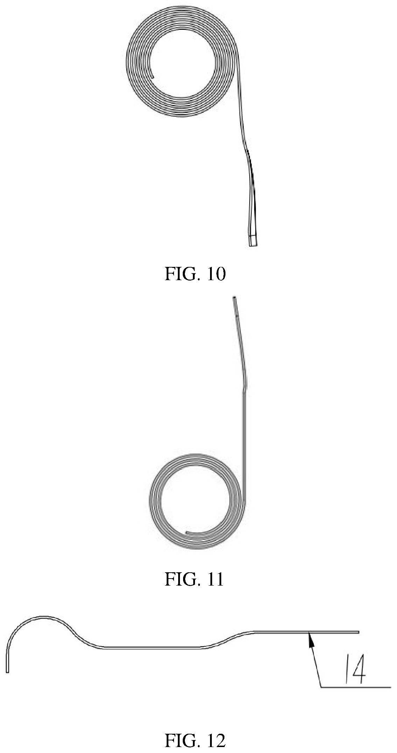

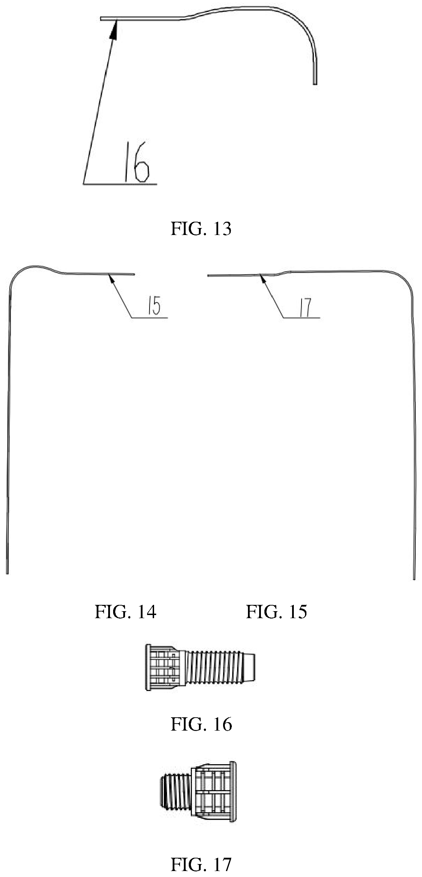

As shown in FIGS. 12-15, the pull cords in the embodiments of the present disclosure are all of a rubber-embedded steel wire pull cord structure.

One end of the front sunshade left pull cord 14 is connected to one end of the front sunshade support crossbar 10 via the front sunshade left pull cord connector 26, and one end of the front sunshade right pull cord 16 is connected to the other end of the front sunshade support crossbar 10 via the front sunshade right pull cord connector 27. The front sunshade support crossbar 10 is clamped to the front sunshade 4, and the front sunshade motor 12 drives the front sunshade left pull cord 14 and the front sunshade right pull cord 16 to move, thus achieving the forward and backward movement of the front sunshade 4. One end of the rear sunshade left pull cord 15 is connected to one end of the rear sunshade support crossbar 11 via the rear sunshade left pull cord connector 28, and one end of the rear sunshade right pull cord 17 is connected to the other end of the rear sunshade support crossbar 11 via the rear sunshade right pull cord connector 29. The rear sunshade support crossbar 11 is clamped to the rear sunshade 5, and the rear sunshade motor 13 drives the rear sunshade left pull cord 15 and the rear sunshade right pull cord 17 to move, thus achieving the forward and backward movement of the rear sunshade 5.

Furthermore, the left side of the front sunshade left pull cord connector 26 is clamped to the inner guide groove of the left guide rail 3, and the right side is clamped to the left groove of the front sunshade support crossbar 10. The right side of the front sunshade right pull cord connector 27 is clamped to the inner guide groove of the right guide rail 2, and the left side is clamped to the right groove of the front sunshade support crossbar 10. Under the traction of the front sunshade left pull cord 14 and the front sunshade right pull cord 16, the front sunshade left pull cord connector 26 moves along the left guide rail 3, and the front sunshade right pull cord connector 27 moves along the right guide rail 2, thereby achieving the opening and closing of the front sunshade 4.

Similarly, the left side of the rear sunshade left pull cord connector 28 is clamped to the inner guide groove of the left guide rail 3, and the right side of the rear sunshade left pull cord connector 28 is clamped to the left groove of the rear sunshade support crossbar 11. The right side of the rear sunshade right pull cord connector 29 is clamped to the inner guide groove of the right guide rail 2, and the left side of the rear sunshade right pull cord connector 29 is clamped to the right groove of the rear sunshade support crossbar 11.

The opening and closing of the front sunshade 4 is controlled by the front sunshade motor 12, and the opening and closing of the rear sunshade 5 is controlled by the rear sunshade motor 13. The structures of the front sunshade motor 12 and the rear sunshade motor 13 are identical. The front sunshade motor 12 incorporates a stator and a worm, which engages with a worm gear. The middle of the worm gear has a long shaft, and the output end of the long shaft is connected to a transmission gear. The transmission gear meshes with the front sunshade left pull cord 14 (rear sunshade left pull cord 15) and the front sunshade right pull cord 16 (rear sunshade right pull cord 17). The transmission gear rotates clockwise or counterclockwise following the rotation of the worm gear and the long shaft, driving the corresponding pull cords to move left and right in the guide groove.

In the embodiments of the present disclosure, both the front sunshade motor 12 and the rear sunshade motor 13 are arranged at the front crossmember 1. A front sunshade left cord guide groove 18, a rear sunshade left cord guide groove 19, a front sunshade right cord guide groove 20, and a rear sunshade right cord guide groove 21 are disposed in the front crossmember 1. That is, the driving devices of the front sunshade 4 and the rear sunshade 5 are distributed on the front side of the entire system, resulting in a more compact overall structure, and the driving devices do not occupy excessive space.

In the embodiments of the present disclosure, the front sunshade motor 12 is disposed at the left end of the front crossmember 1, and the rear sunshade motor 13 is disposed at the right end of the front crossmember 1. The rear sunshade left pull cord 15 is disposed outside the front sunshade left pull cord 14, and the length of the rear sunshade left pull cord 15 is greater than the length of the front sunshade left pull cord 14. The rear sunshade right pull cord 17 is disposed outside the front sunshade right pull cord 16, and the length of the rear sunshade right pull cord 17 is greater than that of the front sunshade right pull cord 16.

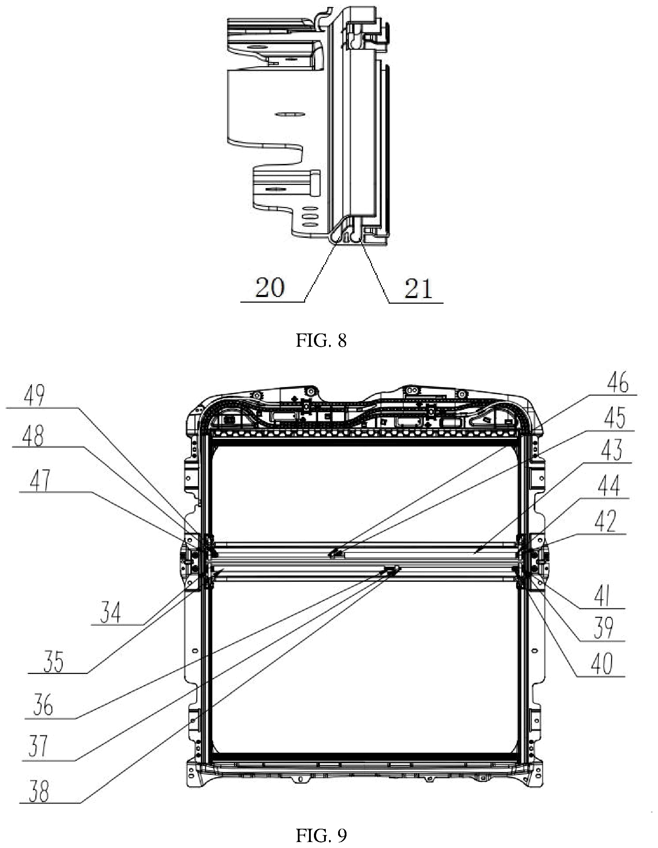

As shown in FIG. 9, the front sunshade retraction mechanism includes a front sunshade retractor 33, a front sunshade roller tube 32, a front sunshade support roller 45, a front sunshade support long shaft 46, a front sunshade short coil spring 48, a front sunshade long coil spring 44, a front sunshade spring barrel 43, and a front sunshade support short shaft 49. Each end of the front sunshade roller tube 32 is connected to a front sunshade retractor 33. The left end of the front sunshade retractor 33 is connected to the front sunshade left coil end 47, and the front sunshade left coil end 47 is connected to the front sunshade support short shaft 49. The front sunshade short coil spring 48 is wound around the front sunshade support short shaft 49. The right end of the front sunshade retractor 33 is connected to the front sunshade right coil end 42, and the front sunshade right coil end 42 is connected to the front sunshade support long shaft 46. The front sunshade long coil spring 44 is wound outside the front sunshade support long shaft 46, and the front sunshade spring barrel 43 is sleeved over the outer side of the front sunshade long coil spring 44. The right end of the front sunshade support long shaft 46 is connected to the front sunshade right coil end 42, and the left end extends from the front sunshade spring barrel 43. The front sunshade support roller 45 is mounted on the left end of the front sunshade support long shaft 46, and the front sunshade support roller 45 is in rolling fit with the inner wall of the front sunshade roller tube 32. The front sunshade roller tube 32 is sleeved over the outer side of the front sunshade spring barrel 43 and the front sunshade support roller 45, with the front sunshade support roller 45 serving as both an internal intermediate support and a rotating roller for the front sunshade roller tube 32.

As shown in FIGS. 9, 16, and 17, the rear sunshade retraction mechanism includes a rear sunshade roller tube 30, a rear sunshade retractor 31, a rear sunshade support short shaft 41, a rear sunshade short coil spring 40, a rear sunshade support long shaft 38, a rear sunshade long coil spring 36, a rear sunshade spring barrel 35, and a rear sunshade support roller 37. Each end of the rear sunshade roller tube 30 is connected to a rear sunshade retractor 31. The rear sunshade retractor 31 disposed at one end of the rear sunshade roller tube 30 is connected to the rear sunshade support short shaft 41, and the rear sunshade short coil spring 40 is mounted on the rear sunshade support short shaft 41. The rear sunshade retractor 31 disposed at the other end of the rear sunshade roller tube 30 is connected to the rear sunshade support long shaft 38, and the rear sunshade long coil spring 36 is mounted on the rear sunshade support long shaft 38. The rear sunshade spring barrel 35 is sleeved over the outer side of the rear sunshade long coil spring 36, and the rear sunshade roller tube 30 is sleeved over the outer side of the rear sunshade short coil spring 40 and the rear sunshade spring barrel 35. The rear sunshade support roller 37 is mounted on the rear sunshade support long shaft 38, and the rear sunshade support roller 37 is in rolling fit with the inner wall of the rear sunshade roller tube 30.

Because the left end of the front sunshade retractor 33 is fit with the front sunshade spring barrel 43, and the right end is fit with the front sunshade right coil end 42, the front sunshade retractor 33 converts tension deformation of the spring into elastic potential energy during the closing process of the front sunshade 4. During the opening process of the front sunshade 4, the elastic potential energy is automatically released to drive the spring to retract, thereby driving the front sunshade roller tube 32 and the front sunshade 4 to retract and open.

As shown in FIG. 10 and FIG. 11, the front sunshade retractor 33 and the rear sunshade retractor 31 in the embodiment have a similar spring-like structure.

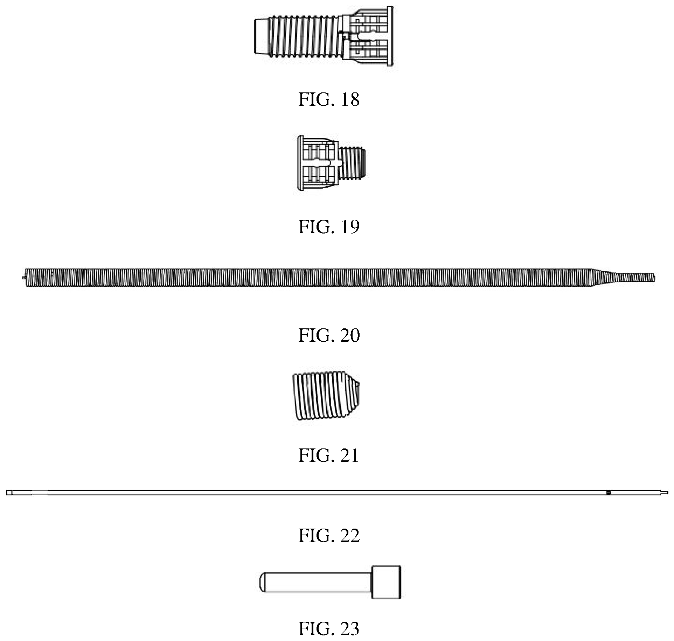

Furthermore, as shown in FIG. 19, the middle of the front sunshade spring barrel 43 is a circular hole, and the head of the front sunshade spring barrel 43 is connected to the front sunshade retractor 33. A coil groove is circumferentially disposed on the connecting section with the head. During the stretching process of the front sunshade retractor 33, the inner diameter of the retractor decreases until the front sunshade retractor 33 is clamped tightly with the front sunshade spring barrel 43, which then drives the left coil end 47 of the front sunshade to rotate. Because the coil groove of the front sunshade spring barrel 43 is connected to the short coil spring 48 of the front sunshade as shown in FIG. 21, the front sunshade spring barrel 43 drives the short coil spring 48 of the front sunshade to rotate as well. By arranging the locked torque of the front sunshade motor 12 and the rotational torque of the short coil spring 48 of the front sunshade to be balanced, it can ensure that the sunshade is tightly sealed when closed and avoid excessive stretching of the front sunshade retractor 33 caused by over-stroke rotation of the front sunshade motor 12, which is irreversible.

As shown in FIG. 23, the front sunshade support short shaft 49 serves as the common support shaft for the front sunshade spring barrel 43, the front sunshade short coil spring 48, the front sunshade roller tube 32, and the front sunshade retractor 33. As shown in FIG. 22, the front sunshade support long shaft 46 serves as the common support shaft for the front sunshade right coil end 42, the front sunshade spring barrel 43, the front sunshade long coil spring 44, the front sunshade support roller 45, the front sunshade roller tube 32, and the front sunshade retractor 33. In the embodiment, by using a combination of long and short shafts with long and short spring structures, better retracting and supporting effects can be achieved.

In the embodiment, the front sunshade spring barrel 43 is made of foam material, configured to wrap the front sunshade long coil spring 44 as shown in FIG. 20. The front sunshade roller tube 32 rotates around the front sunshade spring barrel 43, and the front sunshade long coil spring 44 also rotates around the coil groove at the right coil end 42 of the front sunshade simultaneously as shown in FIG. 18. The front sunshade spring barrel 43 supports the front sunshade roller tube 32 and prevents direct contact and friction between the front sunshade long coil spring 44 and the front sunshade roller tube 32. The foam material can also absorb the noise caused by rotation.

The embodiment adopts a dual sunshade structure consisting of a front sunshade 4 and a rear sunshade 5, which can reduce the roller diameter of each individual sunshade. The roller structure is disposed at the junction of the two sunshades, without occupying the headroom of the front or second row, and without affecting the vision of the driver and passenger. The front sunshade 4 and rear sunshade 5 are respectively provided with motors, allowing for the simultaneous opening of both sunshades, or the independent opening of the front or rear sunshade, meeting the different needs of the front and rear seat occupants.

In the embodiment, two motors are arranged at the front end, simplifying the structure of the rear end of the sunshade without affecting the view of the front-seat occupants, and eliminating the need for additional structures. Moreover, the entire pull cord mechanism is disposed within the guide rail, allowing the rear structure of the sunshade to be made thinner in the Z direction, thereby enhancing the headroom for rear passengers. In addition, the rear structure is made shorter in the X direction, increasing the light transmittance of the sunshade in the X direction and providing a larger light-transmitting area for the rear seats.

### Embodiment 2

The embodiment provides a method for controlling an electric dual sunshade system, which is configured to control the electric dual sunshade system in Embodiment 1. The electric dual sunshade system can be switched in four working states via voice commands from the front driver or passenger, commands on the large screen, and button commands on the auxiliary dashboard from the rear passengers, i.e., the fully open state, the fully closed state, the front-open and rear-closed state, and the front-closed and rear-open state.

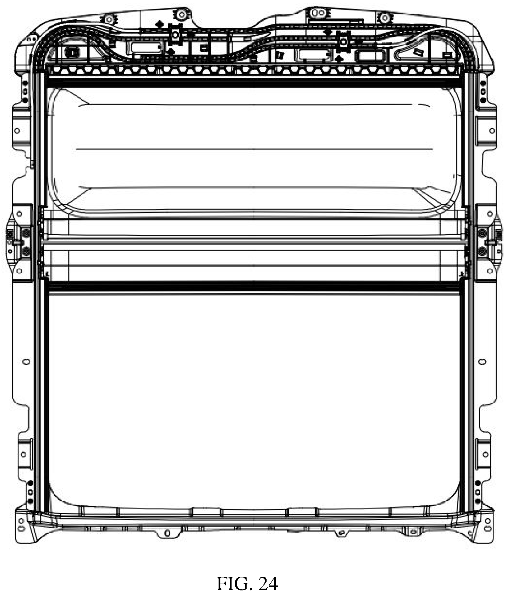

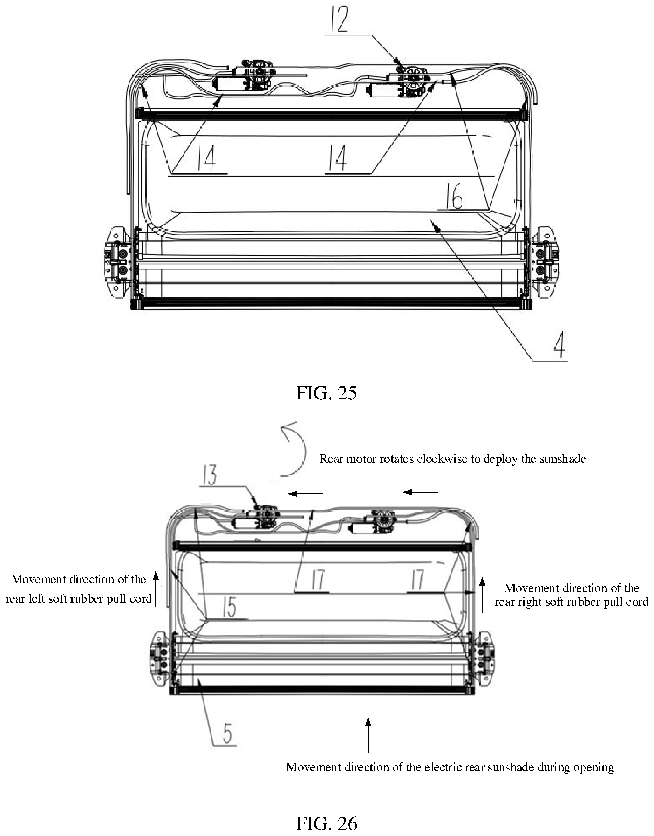

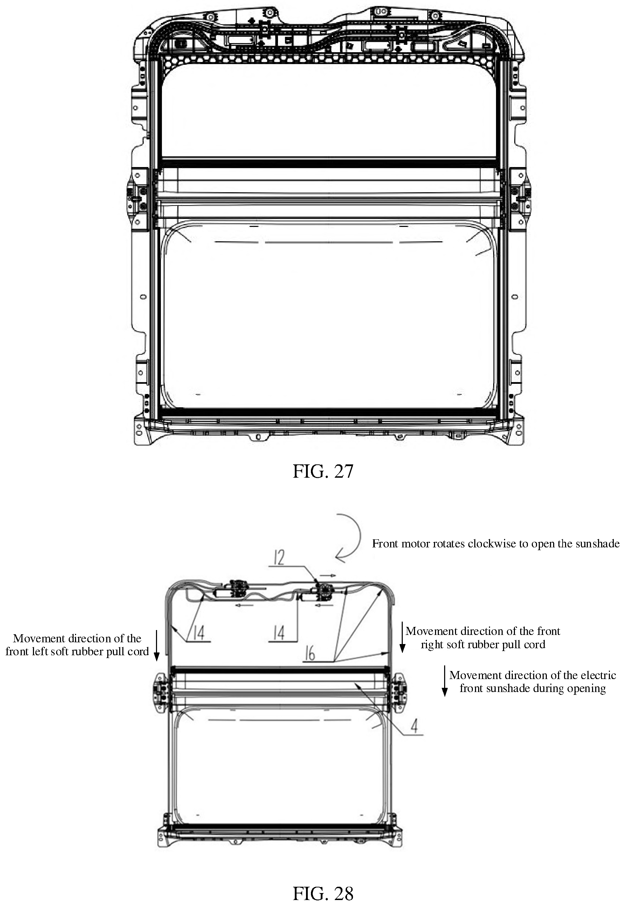

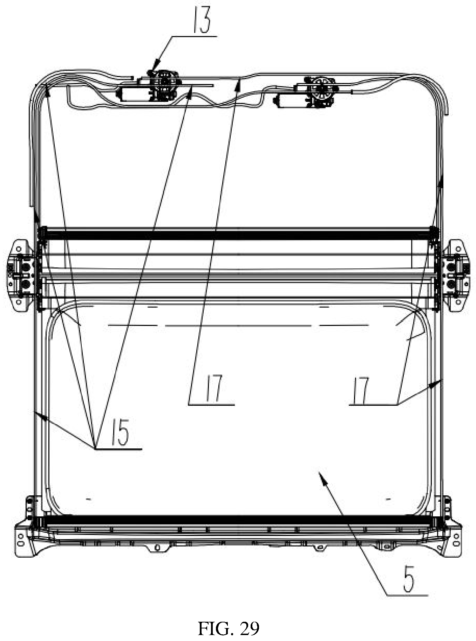

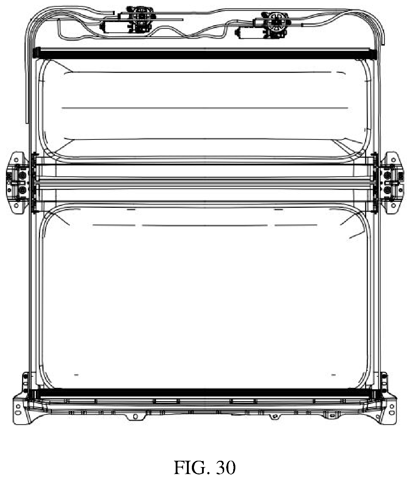

The specific control process is as follows.
(1) In the fully open state, the front sunshade 4 and the rear sunshade 5 are simultaneously retracted.
   As shown in FIGS. 24 to 26, the front sunshade motor 12 rotates clockwise, and the rear sunshade motor 13 rotates counterclockwise. The transmission gear of the front sunshade motor 12 drives the front sunshade left pull cord 14 to move leftward and backward, and drives the front sunshade right pull cord 16 to move rightward and backward, thereby driving the front sunshade 4 to move backward and roll up to the open state. The transmission gear of the rear sunshade motor 13 drives the rear sunshade left pull cord 15 to move rightward and forward, and drives the rear sunshade right pull cord 17 to move leftward and forward, thereby driving the rear sunshade 5 to move forward and roll up to the open state.
(2) In the fully closed state, the front sunshade 4 and the rear sunshade 5 are kept to deploy simultaneously.
   As shown in FIG. 27, the front sunshade motor 12 and the rear sunshade motor 13, via their respective pull cords, keep the front sunshade 4 and the rear sunshade 5 extended to cover the panoramic glass.
(3) In the front-open and rear-closed state, the front sunshade 4 is retracted and the rear sunshade 5 is extended.
   As shown in FIGS. 28-30, when the front sunshade motor 12 rotates clockwise, the transmission gear drives the front sunshade left pull cord 14 to move leftward and backward, and simultaneously drives the front sunshade right pull cord 16 to move rightward and backward. This movement propels the front sunshade 4 to move backward and roll up to the open state. Meanwhile, the rear sunshade motor 13 prevents the rear sunshade 5 from retracting, maintaining the rear sunshade 5 in the extended (closed) state.
(4) In the front-closed and rear-open state, the front sunshade 4 is extended and the rear sunshade 5 is retracted.

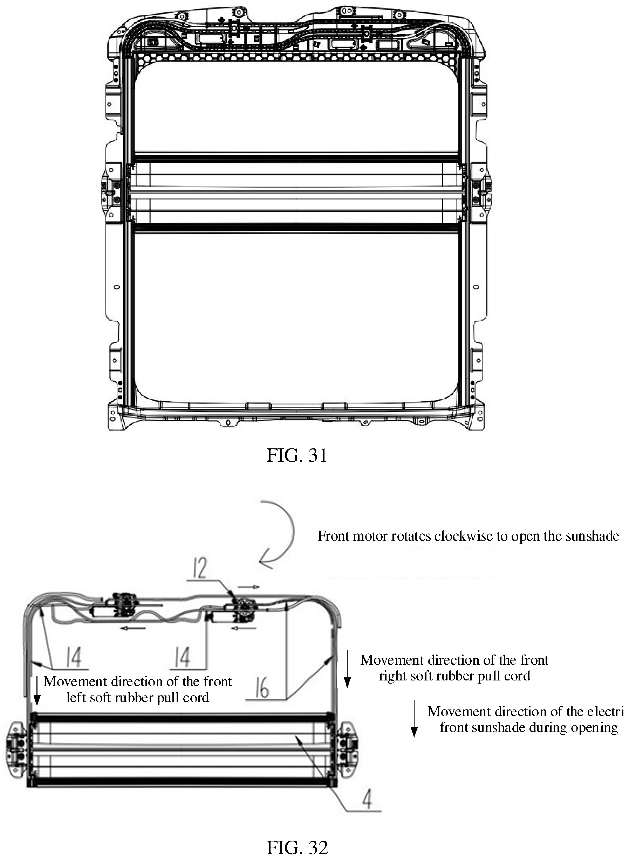

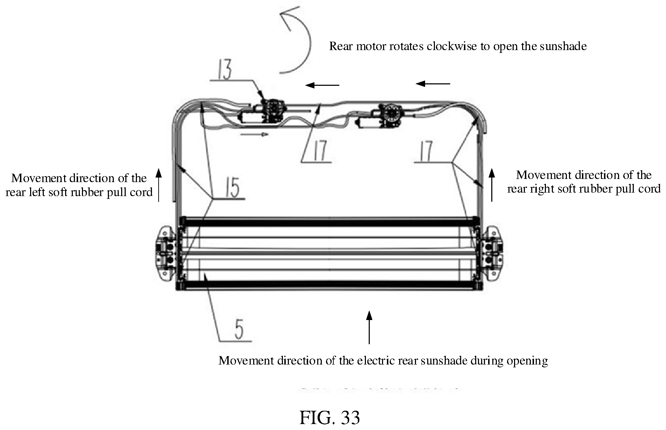

As shown in FIGS. 31 to 33, the rear sunshade motor 13 rotates counterclockwise. The transmission gear of the rear sunshade motor 13 drives the left pull cord 15 of the rear sunshade to move rightward and forward, and simultaneously drives the right pull cord 17 of the rear sunshade to move leftward and forward, thereby driving the rear sunshade 5 to move forward and roll up to the open state. The front sunshade motor 12 keeps the front sunshade 4 from retracting, maintaining the front sunshade 4 in the extended (closed) state.

The embodiment can meet the different needs of front and rear seat occupants by switching between the four working states mentioned above.

### Embodiment 3

The embodiment provides a new energy vehicle including the electric dual sunshade system described in Embodiment 1. The electric dual sunshade system is connected to the inner panel bracket on the left side of the vehicle body via the left pre-hanging buckle 24, and connected to the inner panel bracket on the right side of the vehicle body via the right pre-hanging buckle 25.

The above description is merely a preferred embodiment of the present disclosure and is not intended to limit the present disclosure. For those skilled in the art, the present disclosure can be subject to various modifications and variations. Any modifications, equivalent substitutions, improvements, etc., within the spirit and principles of the present disclosure, shall be included within the scope of protection of the present disclosure.

## Claims

1. An electric dual sunshade system, comprising: a front sunshade (4), a rear sunshade (5), a front sunshade support crossbar (10), a rear sunshade support crossbar (11), a front sunshade left pull cord (14), a front sunshade right pull cord (16), a rear sunshade left pull cord (15), a rear sunshade right pull cord (17), a front sunshade motor (12), a rear sunshade motor (13), a front sunshade retraction mechanism, a rear sunshade retraction mechanism, and a connection crossmember (7); wherein
one end of the front sunshade (4) is connected to the front sunshade support crossbar (10), and one end of the rear sunshade (5) is connected to the rear sunshade support crossbar (11), two ends of the front sunshade support crossbar (10) are respectively connected to the front sunshade left pull cord (14) and the front sunshade right pull cord (16), two ends of the rear sunshade support crossbar (11) are respectively connected to the rear sunshade left pull cord (15) and the rear sunshade right pull cord (17), the front sunshade left pull cord (14) and the front sunshade right pull cord (16) are drawn by the front sunshade motor (12), and the rear sunshade left pull cord (15) and the rear sunshade right pull cord (17) are drawn by the rear sunshade motor (13); and
the front sunshade retraction mechanism is mounted at other end of the front sunshade, and the rear sunshade retraction mechanism is mounted at the other end of the rear sunshade, the front sunshade retraction mechanism and the rear sunshade retraction mechanism are arranged side by side on the connection crossmember (7).

2. The electric dual sunshade system according to claim 1, further comprising: a front crossmember (1), a rear crossmember (6), a left guide rail (3), and a right guide rail (2), wherein two ends of the left guide rail (3) are respectively connected to one end of the front crossmember (1) and one end of the rear crossmember (6), and two ends of the right guide rail (2) are respectively connected to other end of the front crossmember (1) and other end of the rear crossmember (6); and
the front sunshade retraction mechanism and the rear sunshade retraction mechanism are connected at a determined position between the left guide rail (3) and the right guide rail (2).

3. The electric dual sunshade system according to claim 2, wherein
the front sunshade motor (12) and the rear sunshade motor (13) are mounted on the front crossmember (1); and
the front crossmember (1) is internally provided with guide channels for the front sunshade left pull cord (14), the front sunshade right pull cord (16), the rear sunshade left pull cord (15), and the rear sunshade right pull cord (17) to respectively pass through.

4. The electric dual sunshade system according to claim 1, wherein the front sunshade retraction mechanism comprises a front sunshade roller tube (32) and front sunshade retractors (33), wherein each of two ends of the front sunshade roller tube (32) is connected to one of the front sunshade retractors (33); and
the rear sunshade retraction mechanism comprises a rear sunshade roller tube (30) and rear sunshade retractors (31), wherein each end of two ends of the rear sunshade roller tube (30) is connected to one of the rear sunshade retractors (31).

5. The electric dual sunshade system according to claim 4, wherein the front sunshade retraction mechanism further comprises a front sunshade spring barrel (43), a front sunshade support long shaft (46), a front sunshade long coil spring (44), a front sunshade short coil spring (48), and a front sunshade support short shaft (49); wherein
the front sunshade retractor (33) disposed at one end of the front sunshade roller tube (32) is connected to the front sunshade support short shaft (49), and the front sunshade short coil spring (48) is mounted on the front sunshade support short shaft (49); and
the front sunshade retractor (33) disposed at the other end of the front sunshade roller tube (32) is connected to the front sunshade support long shaft (46), the front sunshade long coil spring (44) is mounted on the front sunshade support long shaft (46), the front sunshade spring barrel (43) is sleeved over an outer side of the front sunshade long coil spring (44), and the front sunshade roller tube (32) is sleeved over outer sides of the front sunshade short coil spring (48) and the front sunshade spring barrel (43).

6. The electric dual sunshade system according to claim 5, wherein the rear sunshade retraction mechanism further comprises a rear sunshade support short shaft (41), a rear sunshade short coil spring (40), a rear sunshade support long shaft (38), a rear sunshade long coil spring (36), and a rear sunshade spring barrel (35); wherein
the rear sunshade retractor (31) disposed at one end of the rear sunshade roller tube (30) is connected to the rear sunshade support short shaft (41), and the rear sunshade short coil spring (40) is mounted on the rear sunshade support short shaft (41); and
the rear sunshade retractor (31) disposed at the other end of the rear sunshade roller tube (30) is connected to the rear sunshade support long shaft (38), the rear sunshade long coil spring (36) is mounted on the rear sunshade support long shaft (38), the rear sunshade spring barrel (35) is sleeved over an outer side of the rear sunshade long coil spring (36), and the rear sunshade roller tube (30) is sleeved over outer sides of the rear sunshade short coil spring (40) and the rear sunshade spring barrel (35).

7. The electric dual sunshade system according to claim 5, wherein the front sunshade retraction mechanism further comprises a front sunshade support roller (45) mounted on the front sunshade support long shaft (46), wherein the front sunshade support roller (45) is in rolling fit with an inner wall of the front sunshade roller tube (32).

8. The electric dual sunshade system according to claim 6, wherein the rear sunshade retraction mechanism further comprises a rear sunshade support roller (37) mounted on the rear sunshade support long shaft (38), wherein the rear sunshade support roller (37) is in rolling engagement with an inner wall of the rear sunshade roller tube (30).

9. The electric dual sunshade system according to claim 6, wherein the front sunshade spring barrel (43) and/or the rear sunshade spring barrel (35) are made of foam material.

10. The electric dual sunshade system according to claim 3, further comprising a front sunshade left pull cord connector (26), a front sunshade right pull cord connector (27), a sunshade left pull cord connector (28), and a rear sunshade right pull cord connector (29); wherein
the front sunshade left pull cord (14) is connected to the front sunshade left pull cord connector (26), and the front sunshade right pull cord (16) is connected to the front sunshade right pull cord connector (27), the front sunshade left pull cord connector (26) is engaged with the left guide rail (3), and the front sunshade right pull cord connector (27) is engaged with the right guide rail (2); and
the rear sunshade left pull cord (15) is connected to the rear sunshade left pull cord connector (28), and the rear sunshade right pull cord (17) is connected to the rear sunshade right pull cord connector (29), the rear sunshade left pull cord connector (28) is engaged with the left guide rail (3), and the rear sunshade right pull cord connector (29) is engaged with the right guide rail (2).

11. A method for controlling the electric dual sunshade system as defined in any one of claims 1 to 10, wherein the electric dual sunshade system has a fully open state, a fully closed state, a front-open and rear-closed state, and a front-closed and rear-open state; wherein
in the fully open state, the front sunshade motor (12) and the rear sunshade motor (13) respectively control the front sunshade (4) and the rear sunshade (5) to retract;
in the fully closed state, the front sunshade motor (12) and the rear sunshade motor (13) respectively control the front sunshade (4) and the rear sunshade (5) to deploy;
in the front-open and rear-closed state, the front sunshade motor (12) controls the front sunshade (4) to retract, and the rear sunshade motor (13) controls the rear sunshade (5) to deploy; and
in the front-closed and rear-open state, the front sunshade motor (12) controls the front sunshade (4) to deploy, and the rear sunshade motor (13) controls the rear sunshade (5) to retract.

12. A new energy vehicle, comprising: the electric dual sunshade system as defined in any one of claims 1 to 10.
